# EUROPÄISCHE PATENTSCHRIFT

(11) **EP 1 547 883 B1**
(45) Veröffentlichungstag und Bekanntmachung des Hinweises auf die Patenterteilung: **22.02.2012**
(21) Anmeldenummer: 05102152.5
(22) Anmeldetag: 04.04.2001
(51) Int. Cl.: B60S 1/38, B60S 1/40

(54) **Wischblatt zum Reinigen von Fahrzeugscheiben**
Wiper blade for cleaning vehicle windscreens
Balai d'essuie-glace pour nettoyer des pare-brise de vehicules

(30) Priorität: 25.05.2000 DE 10025706
(43) Veröffentlichungstag der Anmeldung: 29.06.2005
(62) Teilanmeldung aus: 01940118.1
(73) Patentinhaber: ROBERT BOSCH GMBH, 70442 Stuttgart (DE)
(72) Erfinder: Dietrich, Jan, 77815, Buehl (DE); Wilms, Christian, 3582, Koersel-Beringen (BE); Mazurkiewicz, Julius, 3290, Diest (BE); De Block, Peter, 3545, Halen (BE); Wijnants, Peter, 3111, Wezemaal (BE); Criel, Paul, 3800, St. Truiden (BE)

(56) Entgegenhaltungen:
- EP-B- 0 624 133
- WO-A-99/02383
- DE-A1- 19 627 115
- DE-A1- 19 802 451
- GB-A- 1 269 993
- GB-A- 2 336 293
- US-A- 3 626 544
- US-A- 3 636 583

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des von einem mit dem Wischblatt verbundenen Wischerarm ausgehenden Wischblatt-Anpressdruck an der Scheibe gewährleisten. Durch eine entsprechende Krümmung des unbelasteten Tragelements - also wenn das Wischblatt nicht an der Scheibe anliegt - werden die Enden der im Wischbetrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-1505397).

Die Erfindung geht aus von einem Wischblatt nach dem Oberbegriff des Anspruchs 1. Bei einem bekannten Wischblatt dieser Art (DE-A-29611722 U) sind die beiden Federschienen durch an ihren beiden Enden angeordnete Querstegen einstückig verbunden. Da sich diese Querstege in der Ebene der Federschienen befinden muß der zwischen den einander zugewandten Längskanten liegende von den Federschienen und den Querstegen umschlossene Schlitz in seinem einen Endabschnitt so erweitert werden, daß eine ordnungsgemäße Montage der Wischleiste im Schlitz möglich ist. Diese Montage-Erweiterung kann jedoch die Federeigenschaften des Tragelements im Hinblick auf das anzustrebende Wischergebnis nachteilig verändern. Auch ist das manuelle Einfädeln der Wischleiste über diese Erweiterung in den Schlitz kostenintensiv.

Ein gattungsgemäßes Wischblatt ist aus dem Dokument US-A-3626544 bekannt.

### Vorteile der Erfindung

Bei dem erfindungsgemäßen Wischblatt mit den kennzeichnenden Merkmalen des Anspruchs 1 ist es möglich die Wischleiste von einem Ende des Tragelements aus zwischen die beiden einander zugewandten Längskanten der Federschiene geradlinig einzuführen, wobei deren inneren, freien Randstreifen in die Längsnuten der Wischleiste eintauchen. Diese einfache Montagebewegung kann ohne Schwierigkeiten von einem Montageautomaten ausgeführt werden, wodurch eine erhebliche Kostensenkung erreicht wird. Auch kann die nachteilige Montage-Erweiterung des Schlitzes entfallen, weil die brückenartigen Querstege die geradlinige Montagebewegung der Wischleiste von einem Tragelementende aus ermöglichen.

Wenn die Querstege als separate Bauelemente ausgebildet und mit dem Federschienen fest verbunden sind, ergeben sich Vorteile bei der Wischblattfertigung.

Für die Verbindung zwischen den Federschienen und den Querstegen ist es zweckmäßig, wenn die Querstege an den oberen Bandflächen der beiden Federschienen befestigt sind.

Eine stabile, dauerhafte Verbindung zwischen den Federschienen und den Querstegen wird durch eine Verschweißung dieser einzelnen Bauelemente erreicht.

Damit sich das Wischblatt beziehungsweise dessen Wischleiste während des Wischbetriebs störungsfrei der jeweiligen Scheibenkrümmung anpassen kann hat es sich als vorteilhaft erwiesen, wenn die Länge der Federschienen größer ist als die Länge der Wischleiste, weil dann durch entsprechende Ausgestaltungen eine gewisse, vorteilhafte Längsbeweglichkeit der Wischleiste gegenüber dem Tragelement sichergestellt werden kann.

Ein stabiles verwindungsarmes Tragelement wird erreicht, wenn wenigstens an jedem Endabschnitt der beiden zueinander gehörenden Federschienen ein Quersteg angeordnet ist. Je nach Länge des Wischblatt ist es jedoch durchaus denkbar die beiden Federschienen mittels weiteren brückenartigen Querstegen miteinander zu verbinden. Bei kurzen Wischblättern hat es sich gezeigt, dass die Anordnung eines einzigen Querstegs an jedem Endabschnitt des Tragelements zur Erlangung eines stabilen, verwindungsfreien Wischblatts ausreichend ist.

Eine weitere Stabilisierung des Tragelements wird erreicht, wenn ein im Mittelbereich der beiden zu einander gehörenden Federschienen angeordneter Quersteg als Teil einer Anschlußvorrichtung zum verbinden des Wischblatts mit dem Wischerarm ausgebildet ist.

In Weiterbildung der Erfindung weist wenigstens einer der beiden an einem der Endabschnitte der Federschienen angeordneten Querstege einen mit dessen Mittelabschnitt verbundenen, die ihm benachbarte Stirnseite der Wischleiste teilweise überdeckenden Anschlag auf. Dadurch wird ein Herauswandern der Wischleiste aus dem Tragelement in Längsrichtung des Wischblatts verhindert.

Bei der Anordnung von je einem mit je einem Anschlag versehenen Querstegen an den beiden Tragelement-Enden ist im Hinblick auf eine gute Anpassung der Wischleiste an die jeweilige Scheibenkrümmung der Abstand zwischen den beiden Anschlägen größer als die Länge der Wischleiste.

Um das Verletzungsrisiko beim Umgang mit dem Scheibenwischer zu senken ist erfindungsgemäß jeder an den Endabschnitten der beiden Federschienen angeordnete Quersteg mit einer vorzugsweise aus Kunststoff gefertigten Abdeckkappe versehen.

Weitere Vorteile während des Wischbetriebs des erfindungsgemäßen Scheibenwischers ergeben sich dadurch, daß die Dicke einer zwischen den beiden Längsnuten in der Wischleiste vorhandenen Wand oder Stegleiste kleiner ist als der Abstand zwischen dem einander benachbarten Längskanten der beiden zueinander gehörenden Federschienen. In Verbindung mit dem Längsspiels der Wischleiste im Tragelement ergibt sich somit eine "freischwimmende" spannungsfreie Wischleiste die sich ohne Beeinträchtigung durch eine Klemmhalterung während des Wischbetriebs dem Scheibenprofil kontinuierlich anpassen kann.

Eine besonders vorteilhafte Weiterbildung des Wischblatts ergibt sich, wenn die über ihre Längserstreckung einen gleichbleibenden Querschnitt aufweisenden Wischleiste eine an der Scheibe anlegbare, leistenartige Wischlippe hat, welche über eine durch einander gegenüberliegend angeordnete nutartige Einschnürungen gebildete schmale Stegleiste mit einer an dem Tragelement gehaltenen Deckleiste verbunden ist und jede der beiden einander benachbarten inneren Längskanten der Federschienen in einer der beiden nutartigen Einschnürungen der Wischleiste angeordnet ist. Dadurch verringert sich die Bauhöhe des Wischblatts erheblich. Weil die Breite der Einschnürungsnut in einem Teilbereich breiter ist als die Dicke der Federschienen kann die Wischlippe während des Wischbetriebs stets in die erforderliche Schlepplage kippen.

Dabei ist es besonders vorteilhaft, wenn die seitlichen Begrenzungsflächen der nutartigen Einschnürungen von der Stegleiste zu den Längsseiten der Wischleiste divergieren. Die Federschienen können so bei entsprechender Abstimmung die Wischleiste an der Stegleiste führen und der Wischlippe gleichzeitig deren notwendige Kippbewegung in die Schlepplage ermöglichen.

Eine Fortbildung der Erfindung sieht vor, daß die eine seitliche Begrenzungsfläche der nutartigen Einschnürungen im Querschnitt gesehen einen balligen Verlauf hat. Dadurch wird eine günstige und geräuscharme Abrollbewegung dieser Seitenwand an der ihr zugewandten Bandfläche der betreffenden Federschiene ermöglicht.

Dieser Vorteil kann noch weiter verbessert werden, wenn beide seitliche Begrenzungsflächen der nutartigen Einschnürungen im Querschnitt gesehen einen balligen Verlauf haben.

Zur Unterstützung einer optimalen Anlage der Wischleiste an der zu wischenden, vorzugsweise sphärisch gekrümmten Scheibe weist gemäß einer Ausgestaltung der Erfindung die Wischlippe einen rundum geschlossenen Längskanal auf.

Damit sich besondere Maßnahmen zur Befestigung einer Anschlußvorrichtung für einen das Wischblatt bewegenden Wischerarms erübrigen, ragt jede der beiden Federschiene wenigstens mit einem mittleren Randstreifen aus ihrer nutartigen Einschnürung, so daß die Anschlußvorrichtung an den freiliegenden Randstreifen befestigt werden kann.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

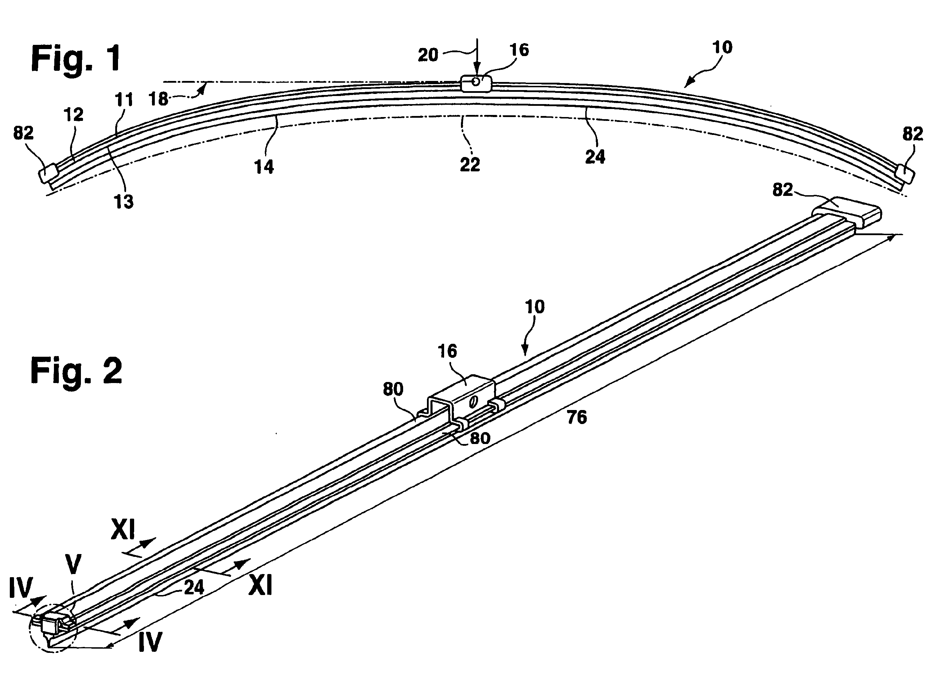

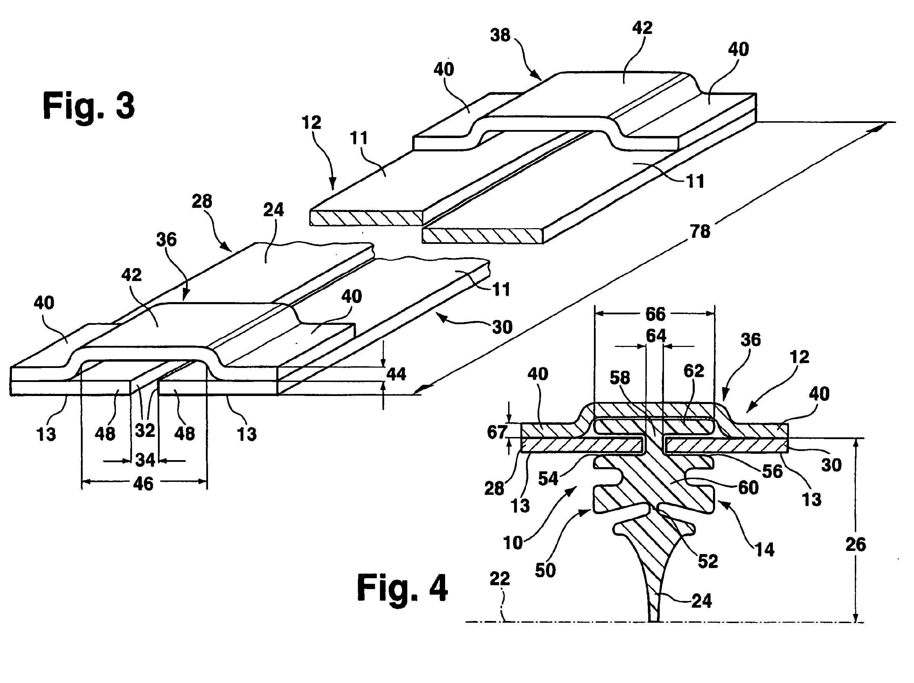

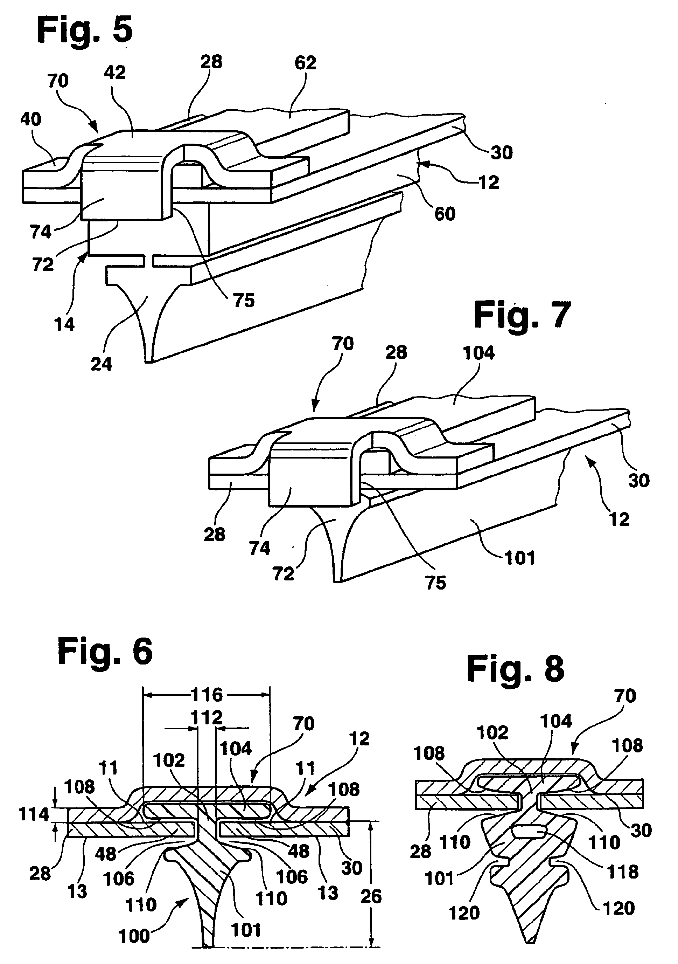

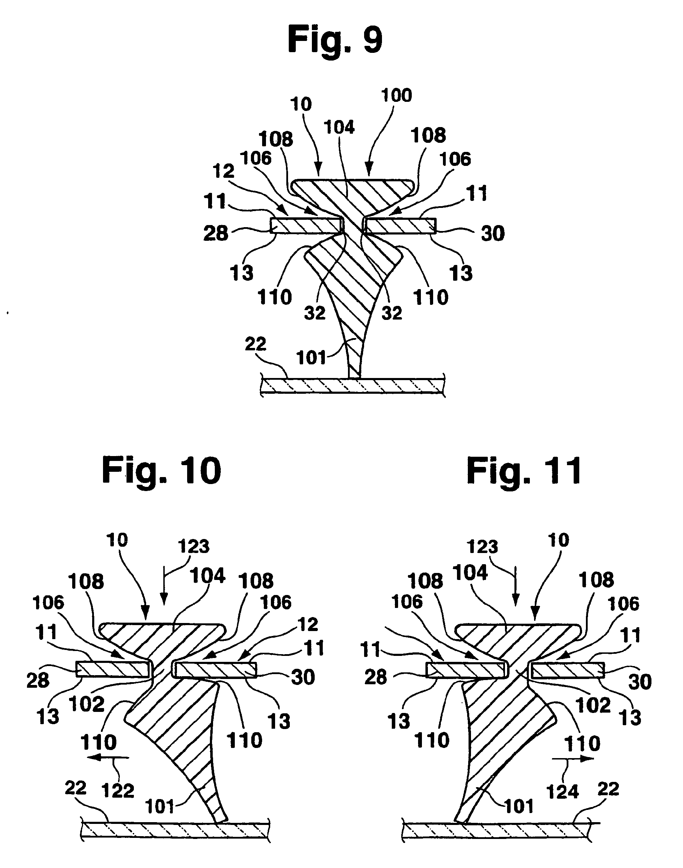

In der Zeichnung zeigen Figur 1 eine Seitenansicht eines erfindungsgemäßen Wischblatts, Figur 2 eine gestreckte Darstellung des Wischblatts gemäß Figur 1 in maßstäblich in perspektivischer Darstellung gezeichnet, Figur 3 eine zum erfindungsgemäßen Wischblatt gehörendes, verkürzt dargestelltes Tragelement in vergrößerter, gestreckter, perspektivischer Darstellung, Figur 4 die Schnittfläche eines Schnitt entlang der Linie IV-IV in Figur 2 in vergrößerter Darstellung, Figur 5 eine in Figur 2 mit V bezeichnete Einzelheit in vergrößerter Darstellung, Figur 6 die Schnittfläche eines Schnitts gemäß Figur 4 durch eine andere Ausführungsform des erfindungsgemäßen Wischblatts, Figur 7 eine Figur 5 entsprechende Einzelheit des Wischblatts gemäß Figur 6, Figur 8 die Schnittfläche eines Schnitts gemäß den Figuren 4 und 6 durch eine weitere Ausführungsform des erfmdungsgemäßen Wischblatts, Figur 9 eine Prinzipdarstellung der Schnittfläche eines Schnitts entlang der Linie IX-IX in Figur 2 durch ein erfindungsgemäßes Wischblatt in vergrößerter Darstellung wobei dieses auf die zu wischende Scheibenoberfläche aufgesetzt ist, Figur 10 das Wischblatt gemäß Figur 9 während des Wischbetriebs in der einen Wischrichtung und Figur 11 das Wischblatt gemäß Figur 9 während des Wischbetriebs in der anderen Wischrichtung.

### Beschreibung der Ausführungsbeispiele

Ein in den Figuren 1 und 2 gezeigtes Wischblatt 10 weist ein bandartig langgestrecktes, federelastisches Tragelement 12 auf, an dessen Unterseite 13 eine langgestreckte, gummielastische Wischleiste 14 längsachsenparallel angeordnet ist. An der Oberseite 11 des auch als Federbalken zu bezeichnenden Tragelements 14 ist in dessen Mittelabschnitt das wischblattseitige Teil 16 einer Anschlußvorrichtung angeordnet, mit deren Hilfe das Wischblatt 10 gelenkig mit einem in Figur 1 strichpunktiert angedeuteten, angetriebenen Wischerarm 18 lösbar verbunden werden kann. Dazu ist der Wischerarm 18 an seinem freien Ende mit dem wischerarmseitigen Teil der Anschlußvorrichtung versehen. Der Wischerarm 18 ist in Richtung des Pfeiles 20 zur zu wischenden Scheibe - beispielsweise zur Windschutzscheibe eines Kraftfahrzeugs - belastet, deren zu wischenden Oberfläche in Figur 1 durch eine strichpunktierte Linie 22 angedeutet ist. Da die Linie 22 die stärkste Krümmung der Scheibenoberfläche darstellen soll ist klar ersichtlich, daß die Krümmung des mit seinen beiden Enden an der Scheibe anliegenden, noch unbelasteten Wischblatt 10 stärker ist als die maximale Scheibenkrümmung (Figur 1). Unter dem Anpressdruck (Pfeil 20) legt sich das Wischblatt 10 seiner Wischlippe 24 über seine gesamte Länge an der Scheibenoberfläche 22 an. Dabei baut sich im beispielsweise aus Metall gefertigten, federelastischen Tragelement 12 eine Spannung auf, welche für eine ordnungsgemäße Anlage der Wischleiste 14 beziehungsweise der Wischlippe 24 über deren gesamte Länge an der Scheibe sowie für eine gleichmäßige Verteilung des Anpressdrucks sorgt.

Im Folgenden soll eine erste Ausführungsform des Wischblatts 10 anhand der Figur 3 bis 5 näher erläutert werden. Aus Figur 4 ist ersichtlich, daß das Tragelement 12 des Wischblatts 10 mit einem Abstand 26 vor der zu wischenden Scheibe 22 liegt. Dabei ist dessen Anordnung so getroffen, daß seine Bandflächen 11 beziehungsweise 13 sich in einer Ebene befinden, welche sich im wesentlichen parallel zur zu wischenden Scheibenoberfläche 22 erstreckt. Der besonders vorteilhafte Aufbau des Tragelements 12 ist insbesondere aus den Figuren 3 und 4 ersichtlich. Es hat zwei in einer gemeinsamen Ebene liegende bandartige Federschienen 28 und 30, die parallel zu einander ausgerichtet sind. Die einander zugewandten inneren Längskanten 32 befmden sich dabei in einem Abstand 34 voneinander. An jedem der beiden Enden der Federschienen 28, 30 sind diese durch einen brückenartigen Quersteg 36 beziehungsweise 38 miteinander verbunden; beispielsweise miteinander verschweißt. Dabei liegt jeder brückenartige Quersteg mit seinen Endabschnitten 40 an der Oberseite 11 des Tragelements 12 beziehungsweise an dessen Federschienen 28, 30 an. Jeder der beiden Querstege 36 beziehungsweise 28 hat einen Mittelabschnitt 42 der sich mit einem Abstand 44 von der oberen Bandfläche 11 der Federschienen befindet und der damit deren brückenartige Gestalt begründet. Da die Längserstreckung 46 der Mittelabschnitte 42 größer ist als der Abstand 34 zwischen den einander zugewandten inneren Längskanten 32, erstrecken sich die beiden Federschienen 28 und 30 mit inneren Randstreifen 48 in den Bereich der Mittelabschnitte 42, wobei die Randstreifen 48 mit einem Abstand 44 unterhalb von den Mittelabschnitten 42 angeordnet sind. Neben den schon erwähnten Aufgaben des Tragelements 12 hinsichtlich der Auflagekraftverteilung soll dieses auch eine vorschriftsmäßige, spannungsfreie Führung der Wischleiste 14 während des Wischbetriebs gewährleisten. Damit ist auch ein geräuscharmer Wischbetrieb sichergestellt.

Die Wischleiste 14 dieser ersten Ausführungsform hat einen Querschnitt, der anhand der Figur 4 deutlich gemacht werden soll. Sie hat eine Kopfleiste 50, mit der die die eigentliche Wischarbeit übernehmende Wischlippe 24 über eine schmale Stegleiste 52 verbunden ist. Die Anordnung der Stegleiste 52 ermöglicht ein Kippen der Wischlippe 24 in eine die Wischarbeit fördernde Schlepplage, die später erläutert werden soll. Die Kopfleiste 50 ist an ihren einander gegenüberliegenden Längsseiten mit zu diesen Längsseiten randoffenen Längsnuten 54 und 56 versehen. Die Längsnuten 54 und 56 dienen zur Aufnahme der inneren Randstreifen 48 der Federschienen 28 und 30. Die Tiefe der Längsnuten 54 und 56 ist so gewählt, daß zwischen den beiden Längsnuten eine Wand 58 verbleibt. Die Kopfleiste 50 hat somit eine Grundleiste 60 und eine Deckleiste 62, die beide durch die Wand 58 miteinander verbunden sind. Die Dicke 64 der Wand 58 ist kleiner als der Abstand 34 zwischen den inneren Längskanten 32 der Federschienen 28, 30 beziehungsweise kleiner als der Abstand zwischen deren inneren Randstreifen 48. Die Breite der beiden Längsnuten 54 und 56 in der Kopfleiste 50 ist so auf die Dicke der Federschienen 28, 30 beziehungsweise deren inneren Randstreifen 48 abgestimmt, daß eine spannungsfreie Halterung der Wischleiste am Tragelement 12 gewährleistet ist, wenn die Wischleiste gemäß Figur 4 mit dem Tragelement 12 gemäß Figur 3 zusammengebaut ist. Da auch die Breite 66 der Deckleiste 62 etwas kleiner ist als die auch als Brückenweite zu bezeichnende Längserstreckung 46 des Mittelabschnitts 42 und deren Dicke 67 geringer ist als der Abstand 44 zwischen dem Mittelabschnitt 42 und den Oberseiten 11 der Federschienen 28, 30 kann die über ihre gesamte Längserstreckung einen gleichbleibenden Querschnitt aufweisende Wischleiste 14 ohne Schwierigkeiten in Längsrichtung in das Tragelement 12 eingeschoben und so mit diesem verbunden werden.

Eine weitere Besonderheit des erfindungsgemäßen Wischblatts ist in Figur 5 dargestellt. Dort wird gezeigt, daß der an einem Ende des Tragelements angeordnete Quersteg 70 an seiner dem Wischblattende zugewandten Seite in seinem Mittelabschnitt mit einem mit ihm verbundenen, die ihm benachbarte Stirnseite 72 zumindest teilweise überdeckenden Anschlag 74 versehen ist. Dabei ist der Anschlag 74 durch einen abgekröpften, lappenartigen Fortsatz des Mittelabschnitts 42 gebildet. Wenn jedes der beiden Wischblattenden beziehungsweise jedes der beiden Tragelementenden mit einem Quersteg 70 gemäß Figur 5 versehen ist, ist darauf zu achten, daß der Abstand zwischen den einander zugewandten Innenwänden 75 der Anschlaglappen 74 etwas größer ist die Länge 76 der Wischleiste 14 (Figur 2). Dies kann beispielsweise auch dadurch erreicht werden, daß die Länge 78 des Tragelements 12 geringfügig größer ist als die Länge 76 der Wischleiste 14. Die beidseitige Anordnung der Anschläge 74 bildet somit eine wirksame Sicherung gegen Herauswandern der Wischleiste 14 in Längsrichtung aus seinem Tragelement 12 während des Wischbetriebs. Selbstverständlich wird in einem solchen Fall die Abkröpfung zumindest eines der beiden Anschlaglappen 74 erst nach dem Einführung der Wischleiste 14 in das Tragelement 12 vorgenommen.

Das im Mittelabschnitt des Wischblatts 10 angeordnete Teil 16 der Anschlußvorrichtung für den Wischerarm umgreift die jeweiligen äußeren, aus den Längsnuten 54 und 56 ragenden äußeren Randstreifen 80 der Federschienen 28, 30 beziehungsweise des Tragelements 12. Die Verbindung zwischen dem Teil 16 und dem Tragelement 12 kann form- und/oder kraftschlüssig sein. Bei einer entsprechenden Länge des Wischblatts kann es auch zweckmäßig sein, wenn zwischen den beiden endseitig angeordnete Querstegen 36 und 38 weitere entsprechende Querstege angeordnet sind. Zur Vermeidung von Verletzungen beim Umgang mit dem Wischblatt insbesondere durch den Endverbraucher ist an den beiden Federschienen 28, 30 beziehungsweise den endseitigen Querstegen 36, 38 eine vorzugsweise aus Kunststoff gefertigte Abdeckkappe 82, vorzugsweise aufgerastet angeordnet, vorzugsweise aufgerastet (Figuren 1 und 2).

Weitere Ausführungsformen des erfindungsgemäßen Wischblatts sind in den Figuren 6 bis 8 dargestellt.

Die Tragelemente dieser Ausführungsformen entsprechen vollständig den schon erläuterten Tragelementen 12 aus den Figuren 3 bis 5, so daß die in diesen Figuren dafür verwendeten Bezugszahlen direkt übernommen werden können. Die Ausgestaltung der Wischleiste 100 bei dieser Ausführungsform unterscheidet sich jedoch grundsätzlich vom Aufbau der Wischleiste 14 bei der schon beschriebenen Ausführungsform. Wie insbesondere Figur 6 zeigt, hat die Wischleiste 100 lediglich eine Wischlippe 101, die über eine Stegleiste 102 mit einer Deckleiste 104 einstückig verbunden ist. Die beim schon beschriebenen Ausführungsbeispiel gemäß den Figuren 4 und 5 vorhandene Grundleiste 60 entfällt somit. Die inneren Randstreifen 48 der Federschienen 28 und 30 liegen in nutartigen Einschnürungen 106 der Wischleiste 100, welche zur Bildung der schmalen Stegleiste 102 notwendig sind. Somit ist die an der Deckleiste 104 ausgebildete seitliche Begrenzungsfläche 108 der Einschnürung 106 der oberen Bandfläche 11 des Tragelements 12 zugekehrt. Die andere seitliche Begrenzungsfläche 110 der nutartigen Einschnürung 106 liegt somit direkt der unteren Bandfläche 13 des Tragelements 12 gegenüber. Es ist somit ersichtlich, daß jede der beiden inneren Längskanten 32 der beiden Federschienen 28, 30 beziehungsweise des Tragelements 12 in einer der beiden nutartigen Einschnürungen 106 der Wischleiste 100 angeordnet ist. Weiter ist insbesondere aus Figur 6 ersichtlich, daß die beiden seitlichen Begrenzungsflächen 110 der Einschnürungen 106 ballig ausgebildet und so angeordnet sind, daß das Breitenmaß der nutartigen Einschnürungen 106 zumindest über einen äußeren Teilbereich breiter ist als die Dicke der Federschienen 28, 30. Dadurch ist es möglich, daß die Wischlippe 101 während des Wischbetriebs in die angestrebte, vorteilhafte Schlepplage kippen kann. Auch bei dieser Ausführungsform des erfindungsgemäßen Wischblatts ist die Breite 112 der Stegleiste 102 derartig auf den Abstand 34 zwischen den einander zugewandten inneren Längskanten 32 der Federschienen 28, 30 abgestimmt, daß zwischen der Stegleiste und den Federschienen ein Luftspalt verbleibt. Weiter ist auch hier die Dicke 114 der Deckleiste 104 etwas geringer als der Abstand 44 zwischen dem Mittelabschnitt 42 des Querstegs 36 und dem inneren Randstreifen 48. Auch die Breite 116 der Deckleiste 104 ist etwas geringer als die Längserstreckung 46 des Mittelabschnitts 42 der brückenartige Querstege 36. Dadurch ist es möglich die über ihre gesamte Länge einen gleichbleibenden Querschnitt aufweisende Wischleiste 100 ohne Hemmnisse in ihrer Längserstreckung in das Tragelement 112 einzuführen so daß die in Figur 6 dargestellte Montagestellung erlangt wird. Auch bei dieser Ausführungsform liegt die Ebene, in welche sich das Tragelement 12 erstreckt mit Abstand 26 von der Oberfläche 22 der zu wischenden Scheibe 22.

Wie anhand der Figur 5 schon beschrieben kann auch bei dieser Ausführungsform des erfindungsgemäßen Wischblatts jeder der beiden brückenartigen Querstege 70 an seinen in Längserstreckung des Wischblatts gesehen äußeren Enden mit einem abgekröpften Anschlag 74 versehen sein, so daß nach dem Einführen der Wischleiste 14 in das Tragelement 12 und dem Abkröpfen der Anschlagklappen 74 eine zuverlässige Längssicherung der Wischleiste 100 im Tragelement 12 sichergestellt ist. Es ist klar, daß auch bei dieser Ausführungsform der Abstand zwischen den einander zugewandten Innenwänden 75 der Anschlaglappen 74 etwas größer sein muß als die Länge 76 der Wischleiste.

Eine weitere Ausführungsform des erfindungsgemäßen Wischblatt soll anhand der Figur 8 erläutert werden. Die Ausführungsform gemäß Figur 8 entspricht in ihrem grundsätzlichen Aufbau dem Aufbau der anhand der Figur 6 beschriebenen Ausführungsform. Abweichend von der Ausführungsform gemäß Figur 6 sind jedoch bei dieser Ausführungsform nicht nur die seitliche Begrenzungsflächen 110 sondern auch die anderen, an der Deckleiste 104 ausgebildeten seitlichen Begrenzungsflächen 108 der nutartigen Einschnürungen 106 ballig ausgebildet. Weiter unterscheidet sich die Ausführungsform gemäß Figur 8 von der Ausführungsform gemäß Figur 6 noch durch einen in der Wischlippe 101 angeordneten, durchgehenden rundum geschlossenen Längskanal 118. Die Anordnung des Längskanals 118 in der Wischlippe kann für sich alleine oder in Verbindung mit weiteren Längsnuten für ein weiches, geräuscharmes Umlegeverhalten der Wischlippe während des Wischbetriebs sorgen. Auch ist dessen Anordnung nicht zwangsläufig in Verbindung mit der balligen Ausbildung der Begrenzungsflächen 108, 110 erforderlich.

Wie aus den Figuren 2 und 3 ersichtlich ist, ist die Breite des Tragelements 12 über die gesamte Längserstreckung gleich. Es ist jedoch auch denkbar, daß sich das Tragelement zu den Endabschnitten des Wischblatts hin verjüngt. Damit das Teil 16 an dem Wischblatt befestigt werden kann genügt es, wenn jede Federschiene 28, 30 wenigstens mit einem mittleren, äußeren Randstreifen 80 aus ihrer nutartigen Einschnürung ragt, so daß an diesem Randstreifen 80 das Teil 16 der Anschlußvorrichtung befestigt werden kann. Weiter ist denkbar, daß anstelle eines Tragelements 12 gemäß Figur 3 die beiden Federschienen als separate Bauteile ausgebildet und in den nutartigen Einschnürungen der Wischleiste angeordnet sein können. Die Sicherstellung insbesondere des Abstandmaßes 34 kann dann durch weitere, nicht dargestellte Bauelemente übernommen werden.

Die Figuren 9 bis 11 zeigen Prinzip-Schnittflächendarstellungen des Wischblatts gemäß den Figuren 6 und 7, geschnitten entlang der Linie IX-IX in Figur 2 wobei in Figur 9 das Wischblatt 10 mit seiner Wischlippe 101 lediglich auf die zu wischenden Scheibenoberfläche 22 aufgesetzt ist. Die Wischleiste 100 ist mit Spiel zwischen den inneren Längskanten 32 der beiden Federschienen 28, 30 gehalten (vgl. auch Figuren 3 und 4). Da die Länge 76 der Wischleiste 100 auch etwas geringer ist als die Länge 78 des Tragelements 12 bzw. geringer ist als das Maß zwischen den einander zugewandten Innenwänden 75 der Anschläge 74 an den beiden Enden des Tragelements 12 ergibt sich eine sogenannte "freischwimmende", spannungsfreie aber betriebssichere Halterung der Wischleiste 100 im Tragelement 12.

Wenn nun während des Wischbetriebs das Wischblatt 10 unter Belastung durch den Anpreßdruck (Pfeil 20 in Fig. 1) in Richtung des Pfeils 122 in Fig. 10 über die Scheibe 22 bewegt wird, kippt die Wischlippe 101 im Bereich der Stegleiste 102 in eine vorteilhafte Schlepplage wobei sich das Tragelement 12 der Scheibe etwas annähert (Pfeil 123). Die Kippbewegung wird dadurch begrenzt, dass sich die eine, seitliche Begrenzungsfläche 110 der einen nutartigen Einschnürung 106 an der Unterseite 13 der einen Federschiene 30 abstützt. Wann das Wischblatt 10 seine Umkehrposition erreicht hat und durch den Wischerarm 18 in Gegenrichtung (Pfeil 124 in Fig. 11) bewegt wird, kippt die Wischlippe 101 über eine aus Figur 9 ersichtliche Zwischenposition in seine andere Schlepplage (Fig. 11) wobei sich die Wischlippe 101 mit der seitlichen Begrenzungsfläche 110 der anderen nutartigen Einschnürung 106 an der Unterseite 13 der anderen Federschiene 28 abstützt.

Wenn sich die Schlepplagen der Wischlippe 101 nahe ihren Umkehrlagen - wegen der üblicherweise sphärischen Krümmung der Windschutzscheibe 22 - der Scheibe annähert, rollen die ballig ausgebildeten Begrenzungsflächen 110 geräuschlos an den Unterseiten 13 der Federschienen 28, 30 ab. Entsprechend können - wenn nötig - auch die anderen balligen Begrenzungsflächen 108 der nutartigen Einschnürungen 106 an den Oberseiten 11 der Federschienen 28 bzw. 30 abrollen.

## Patentansprüche

1. Wischblatt (10) für Scheiben vorzugsweise von Kraftfahrzeugen mit einer langgestreckten, gummielastischen, an der Scheibe (22) anlegbaren Wischleiste (14), die längsachsenparallel an einem langgestreckten, federelastischen Tragelement (12) angeordnet ist, mit welchem eine Vorrichtung zum Anschließen des Wischblatts an einen angetriebenen Wischerarm (18) direkt verbunden ist, wobei das Tragelement (12) zwei in einer vor der Scheibe liegenden, zur Scheibe im wesentlichen parallelen Ebene angeordnete bandartige Federschienen (28, 30) hat, deren einen, unteren Bandflächen (13) der Scheibe zugewandt sind, deren einander benachbarten inneren Längskanten (48) mit Abstand (34) voneinander liegend in jeweils eine jeder Längskante zugeordnete, zur Längsseite der Wischleiste (14) offenen Längsnut (54, 56, 106) eintauchen, wobei die beiden Federschienen (28, 30) durch wenigstens zwei in Längsrichtung endseitige, brückenartige Querstege (36, 38) miteinander verbunden sind, **dadurch gekennzeichnet, dass** an den beiden Federschienen (28) eine Abdeckkappe (82) angeordnet ist, die an den Querstegen (36, 38) aufgerastet ist.

2. Wischblatt nach Anspruch 1, **dadurch gekennzeichnet, dass** die Abdeckkappe (82) an den Endseiten des Tragelements (12) angeordnet ist

3. Wischblatt nach Anspruch 1 oder 2, **dadurch gekennzeichnet, dass** die Abdeckkappe (82) aus Kunststoff gefertigt ist.

4. Wischblatt nach einem der vorhergehenden Ansprüche, **dadurch gekennzeichnet, dass** jeder Quersteg (36, 38) einen Mittelabschnitt (42) hat, der sich mit Abstand (44) von den oberen Bandflächen (11) der Federschienen (28, 30) erstreckt, so daß sich brückenartige Querstege (36, 38) ergeben, wobei der Abstand (34) zwischen den beiden Längsschienen (28, 30) kleiner ist als die Brückenweite (46).

5. Wischblatt nach einem der vorhergehenden Ansprüche, **dadurch gekennzeichnet, daß** die Querstege (36, 38) als separate Bauelemente ausgebildet und mit den beiden Federschienen (28, 30) fest verbunden sind.

6. Wischblatt nach einem der vorhergehenden Ansprüche, **dadurch gekennzeichnet, daß** die Querstege (36. 38) an den oberen Bandflächen (11) der beiden Federschienen (28, 30) befestigt sind.

7. Wischblatt nach einem der vorhergehenden Ansprüche, **dadurch gekennzeichnet, daß** die Querstege (36, 38) mit den beiden Federschienen (28, 30) verschweißt sind.

8. Wischblatt nach einem der vorhergehenden Ansprüche, **dadurch gekennzeichnet, daß** die Länge (78) der Federschienen größer ist als die Länge (76) der Wischleiste (14).

9. Wischblatt nach einem der vorhergehenden Ansprüche, **dadurch gekennzeichnet, daß** wenigstens an jedem Endabschnitt der beiden zueinander gehörenden Federschienen (28, 30) eine Querstege (36, 38) angeordnet ist.

10. Wischblatt nach einem der vorhergehenden Ansprüche, **dadurch gekennzeichnet, daß** ein im Mittelbereich der beiden zueinander gehörenden Federschienen (28, 30) angeordneter Quersteg als Teil (16) einer Anschlußvorrichtung zum Verbinden des Wischblatts (10) mit dem Wischerarm (18) ausgebildet ist.

11. Wischblatt nach einem der vorhergehenden Ansprüche, **dadurch gekennzeichnet, daß** wenigstens einer der beidenan einem Endabschnitt der Federschienen (28, 30) angeordneter Querstege (36, 80) mit einen mit dessen Mittelabschnitt (42) verbundenen, die ihm benachbarte Stirnseite (72) der Wischleiste teilweise überdeckenden Anschlag (74) versehen ist.

12. Wischblatt nach einem der vorhergehenden Ansprüche, **dadurch gekennzeichnet, dass** beide an den Enden des Tragelements (12) angeordneten Querstege (36, 38) mit einem Anschlag (74) versehen sind.

13. Wischblatt nach einem der vorhergehenden Ansprüche, **dadurch gekennzeichnet**, das die Dicke (64) einer zwischen den beiden Längsnuten (54, 56) in der Wischleiste (14) vorhandenen Wand (58) kleiner ist als der Abstand (34) zwischen den einander benachbarten Längskanten (32) der beiden zueinander gehörenden Federschienen (28, 30).

14. Wischblatt nach einem der vorhergehenden Ansprüche, **dadurch gekennzeichnet, daß** die über ihre Längserstreckung einen gleichbleibenden Querschnitt aufweisende Wischleiste (100) eine an der Scheibe anlegbare leistenartige Wischlippe (101) hat, welche über eine durch einander gegenüberliegend angeordnete nutartige Einschnürungen (106) gebildete schmale Stegleiste (102) mit einer an dem Tragelement (12) gehaltene Deckleiste (104) verbunden ist und daß jede der beiden einander benachbarten inneren Längskanten (32) der Federschienen (28, 30) in einer der beiden nutartigen Einschnürungen (106) der Wischleiste (100) angeordnet ist.

15. Wischblatt nach Anspruch 14, **dadurch gekennzeichnet, daß** die seitlichen Begrenzungsflächen (108, 110) der nutartigen Einschnürungen (106) von der Stegleiste (102) zu den Längsseiten der Wischleiste divergieren.

16. Wischblatt nach Anspruch 15, **dadurch gekennzeichnet, daß** die eine seitliche Begrenzungsfläche (110) der nutartigen Einschnürungen (106) im Querschnitt gesehen einen balligen Verlauf hat.

17. Wischblatt nach Anspruch 15, **dadurch gekennzeichnet, daß** beide seitlichen Begrenzungsflächen (108, 110) der nutartigen Einschnürungen (106) im Querschnitt gesehen einen balligen Verlauf haben.

18. Wischblatt nach einem der Ansprüche 1 bis 17, **dadurch gekennzeichnet, daß** die Wischlippe (101) einen rundum geschlossenen Längskanal (118) aufweist.

19. Wischblatt nach einem der Ansprüche 1 bis 18; **dadurch gekennzeichnet, daß** jede Federschiene (28, 30) wenigstens mit einem mittleren Randstreifen aus ihrer nutartigen Einschnürung (106) ragt.

## Claims

1. Wiper blade (10) for windscreens preferably of motor vehicles, with an elongate, rubber-elastic wiper strip (14) which can be placed against the windscreen (22) and is arranged parallel to the longitudinal axis on an elongate, spring-elastic supporting element (12) to which a device for joining the wiper blade to a driven wiper arm (18) is directly connected, wherein the supporting element (12) has two band-like spring rails (28, 30) which are located in front of the windscreen, are arranged in a plane substantially parallel to the windscreen, the lower band surfaces (13) of which face the windscreen and the mutually adjacent, inner longitudinal edges (48) of said band surfaces lying at a distance (34) from each other each enter an open longitudinal groove (54, 56, 106) which is assigned to each longitudinal edge and is open towards the longitudinal side of the wiper strip (14), wherein the two spring rails (28, 30) are connected to each other by means of at least two bridge-like transverse webs (36, 38) on the end sides in the longitudinal direction, **characterized in that** a covering cap (82) which is snapped on the transverse webs (36, 38) is arranged on the two spring rails (28).

2. Wiper blade according to Claim 1, **characterized in that** the covering cap (82) is arranged on the end sides of the supporting element (12).

3. Wiper blade according to Claim 1 or 2, **characterized in that** the covering cap (82) is produced from plastic.

4. Wiper blade according to one of the preceding claims, **characterized in that** each transverse web (36, 38) has a central section (42) which extends at a distance (44) from the upper band surfaces (11) of the spring rails (28, 30), thus resulting in bridge-like transverse webs (36, 38), the distance (34) between the two longitudinal rails (28, 30) being smaller than the bridge width (46).

5. Wiper blade according to one of the preceding claims, **characterized in that** the transverse webs (36, 38) are designed as separate components and are connected fixedly to the two spring rails (28, 30).

6. Wiper blade according to one of the preceding claims, **characterized in that** the transverse webs (36, 38) are fastened to the upper band surfaces (11) of the two spring rails (28, 30).

7. Wiper blade according to one of the preceding claims, **characterized in that** the transverse webs (36, 38) are welded to the two spring rails (28, 30).

8. Wiper blade according to one of the preceding claims, **characterized in that** the length (78) of the spring rails is greater than the length (76) of the wiper strip (14).

9. Wiper blade according to one of the preceding claims, **characterized in that** a transverse web (36, 38) is arranged at least on each end section of the two spring rails (28, 30) belonging to each other.

10. Wiper blade according to one of the preceding claims, **characterized in that** a transverse web arranged in the central region of the two spring rails (28, 30) belonging to each other is designed as part (16) of a joining device for connecting the wiper blade (10) to the wiper arm (18).

11. Wiper blade according to one of the preceding claims, **characterized in that** at least one of the two transverse webs (36, 38) arranged on an end section of the spring rails (28, 30) is provided with a stop (74) which is connected to the central section (42) of said transverse web and partially covers the adjacent end side (72) of the wiper strip.

12. Wiper blade according to one of the preceding claims, **characterized in that** both transverse webs (36, 38) arranged at the ends of the supporting element (12) are provided with a stop (74).

13. Wiper blade according to one of the preceding claims, **characterized in that** the thickness (64) of a wall (58) present in the wiper strip (14) between the two longitudinal grooves (54, 56) is smaller than the distance (34) between the mutually adjacent longitudinal edges (32) of the two spring rails (28, 30) belonging to each other.

14. Wiper blade according to one of the preceding claims, **characterized in that** the wiper strip (100) which has a constant cross section over the longitudinal extent thereof has a strip-like wiper lip (101) which can be placed against the windscreen and is connected via a narrow web strip (102), which is formed by groove-like constrictions (106) arranged opposite each other, to a cover strip (104) held on the supporting element (12), and **in that** each of the two mutually adjacent inner longitudinal edges (32) of the spring rails (28, 30) is arranged in one of the two groove-like constrictions (106) of the wiper strip (100).

15. Wiper blade according to Claim 14, **characterized in that** the lateral boundary surfaces (108, 110) of the groove-like constrictions (106) diverge from the web strip (102) to the longitudinal sides of the wiper strip.

16. Wiper blade according to Claim 15, **characterized in that** the one lateral boundary surface (110) of the groove-like constrictions (106) has a spherical profile, as seen in cross section.

17. Wiper blade according to Claim 15, **characterized in that** both lateral boundary surfaces (108, 110) of the groove-like constrictions (106) have a spherical profile, as seen in cross section.

18. Wiper blade according to one of Claim 1 to 17, **characterized in that** the wiper lip (101) has a longitudinal channel (118) which is closed all the way around.

19. Wiper blade according to one of Claims 1 to 18, **characterized in that** each spring rail (28, 30) protrudes out of the groove-like constriction (106) thereof at least with a central border strip.

## Revendications

1. Balai d'essuie-glace (10) pour vitres, de préférence de véhicules automobiles, comprenant une raclette de balai d'essuie-glace (14) allongée, ayant l'élasticité du caoutchouc, pouvant être appliquée contre la vitre (22), qui est disposée parallèlement à l'axe longitudinal sur un élément de support (12) allongé, élastique à ressort, auquel est directement connecté un dispositif de raccordement du balai d'essuie-glace à un bras d'essuie-glace entraîné (18), l'élément de support (12) ayant deux rails élastiques (28, 30) en forme de bande disposés dans un plan situé devant la vitre, essentiellement parallèle à la vitre, dont les surfaces de bande inférieures (13) sont tournées vers la vitre, dont les arêtes longitudinales intérieures (48) adjacentes l'une à l'autre, à distance (34) l'une de l'autre, plongent dans une rainure longitudinale respective (54, 56, 106) ouverte vers le côté longitudinal de la raclette de balai d'essuie-glace (14) et associée à chaque arête longitudinale, les deux rails élastiques (28, 30) étant connectés l'un à l'autre par au moins deux nervures transversales (36, 38) en forme de pont, du côté de l'extrémité dans la direction longitudinale, **caractérisé en ce que** sur les deux rails élastiques (28) est disposé un chapeau de recouvrement (82) qui est encliqueté sur les nervures transversales (36, 38).

2. Balai d'essuie-glace selon la revendication 1, **caractérisé en ce que** le capuchon de recouvrement (82) est disposé sur les côtés d'extrémité de l'élément de support (12).

3. Balai d'essuie-glace selon la revendication 1 ou 2, **caractérisé en ce que** le capuchon de recouvrement (82) est fabriqué en plastique.

4. Balai d'essuie-glace selon l'une quelconque des revendications précédentes, **caractérisé en ce que** chaque nervure transversale (36, 38) a une portion centrale (42) qui s'étend à distance (44) des surfaces de bande supérieures (11) des rails élastiques (28, 30), de sorte que des nervures transversales en forme de pont (36, 38) en résultent, la distance (34) entre les deux rails longitudinaux (28, 30) étant inférieure à la largeur du pont (46).

5. Balai d'essuie-glace selon l'une quelconque des revendications précédentes, **caractérisé en ce que** les nervures transversales (36, 38) sont réalisées sous forme de composants séparés et sont connectées fixement aux deux rails élastiques (28, 30).

6. Balai d'essuie-glace selon l'une quelconque des revendications précédentes, **caractérisé en ce que** les nervures transversales (36, 38) sont fixées sur les surfaces de bande supérieures (11) des deux rails élastiques (28, 30).

7. Balai d'essuie-glace selon l'une quelconque des revendications précédentes, **caractérisé en ce que** les nervures transversales (36, 38) sont soudées aux deux rails élastiques (28, 30).

8. Balai d'essuie-glace selon l'une quelconque des revendications précédentes, **caractérisé en ce que** la longueur (78) des rails élastiques est supérieure à la longueur (76) de la raclette de balai d'essuie-glace (14).

9. Balai d'essuie-glace selon l'une quelconque des revendications précédentes, **caractérisé en ce qu'**au moins sur chaque portion d'extrémité des deux rails élastiques (28, 30) associés l'un à l'autre est disposée une nervure transversale (36, 38).

10. Balai d'essuie-glace selon l'une quelconque des revendications précédentes, **caractérisé en ce qu'**une nervure transversale disposée dans la région centrale des deux rails élastiques (28, 30) associés l'un à l'autre est réalisée en tant que pièce (16) d'un dispositif de raccordement pour connecter le balai d'essuie-glace (10) au bras d'essuie-glace (18).

11. Balai d'essuie-glace selon l'une quelconque des revendications précédentes, **caractérisé en ce qu'**au moins l'une des deux nervures transversales (36, 38) disposées sur une portion d'extrémité des rails élastiques (28, 30) est pourvue d'une butée (74) connectée à sa portion centrale (42), recouvrant en partie le côté frontal (72) de la raclette de balai d'essuie-glace qui lui est adjacent.

12. Balai d'essuie-glace selon l'une quelconque des revendications précédentes, **caractérisé en ce que** les deux nervures transversales (36, 38) disposées aux extrémités de l'élément de support (12) sont pourvues d'une butée (74).

13. Balai d'essuie-glace selon l'une quelconque des revendications précédentes, **caractérisé en ce que** l'épaisseur (64) d'une paroi (58) prévue entre les deux rainures longitudinales (54, 56) dans la raclette de balai d'essuie-glace (14) est inférieure à la distance (34) entre les arêtes longitudinales (32) adjacentes l'une à l'autre des deux rails élastiques (28, 30) associés l'un à l'autre.

14. Balai d'essuie-glace selon l'une quelconque des revendications précédentes, **caractérisé en ce que** la raclette de balai d'essuie-glace (100) présentant sur son étendue longitudinale une section transversale uniforme a une lèvre de balai d'essuie-glace (101) en forme de raclette pouvant s'appliquer contre la vitre, qui est connectée, par le biais d'une nervure d'âme étroite (102) formée par des rétrécissements en forme de rainure (106) opposés l'un à l'autre, à une baguette de recouvrement (104) maintenue sur l'élément de support (12) et **en ce que** chacune des deux arêtes longitudinales intérieures (32), adjacentes l'une à l'autre, des rails élastiques (28, 30), est disposée dans l'un des deux rétrécissements (106) en forme de rainure de la raclette de balai d'essuie-glace (100).

15. Balai d'essuie-glace selon la revendication 14, **caractérisé en ce que** les surfaces de limitation latérales (108, 110) des rétrécissements en forme de rainure (106) divergent depuis la nervure d'âme (102) vers les côtés longitudinaux de la raclette de balai d'essuie-glace.

16. Balai d'essuie-glace selon la revendication 15, **caractérisé en ce que** l'une des surfaces de limitation latérales (110) des rétrécissements en forme de rainure (106) a une allure bombée, vue en section transversale.

17. Balai d'essuie-glace selon la revendication 15, **caractérisé en ce que** les deux surfaces de limitation latérales (108, 110) des rétrécissements en forme de rainure (106) ont une allure bombée, vue en section transversale.

18. Balai d'essuie-glace selon l'une quelconque des revendications 1 à 17, **caractérisé en ce que** la lèvre de balai d'essuie-glace (101) présente un canal longitudinal (118) fermé de tous les côtés.

19. Balai d'essuie-glace selon l'une quelconque des revendications 1 à 18, **caractérisé en ce que** chaque rail élastique (28, 30) fait saillie au moins avec une bande de bord centrale hors de son rétrécissement en forme de rainure (106).
